# EUROPEAN PATENT APPLICATION

(11) **EP 3 798 198 A1**
(43) Date of publication of application: **31.03.2021**
(21) Application number: 20188000.2
(22) Date of filing: 27.07.2020
(51) Int. Cl.: C04B 26/14, C04B 26/18, B29C 70/60, B29C 70/34, B29C 70/26, C08L 63/00, C08L 67/00, C08K 3/08, C08K 5/54, B09B 3/00, B32B 27/18, B32B 27/20, B32B 27/28, B32B 27/36, B32B 27/38, C08K 3/34, C08K 3/36

(54) **COMPOSITE MATERIAL, METHOD FOR OBTAINING THE SAME AND ARTICLES THEREOF**

(30) Priority: 26.07.2019 PT 2019115676
(71) Applicant: Empresa das Lousas de Valongo, SA, 4440-032 Campo VLG (PT)
(72) Inventor: ESTEVES DE SOUSA FANGUEIRO, Raul Manuel, 4700-150 BRAGA (PT); MACEDO DA CUNHA, Fernando Eduardo, 4710-409 BRAGA (PT); DA COSTA MOTA, Carlos Miguel, 4720-535 LAGO (PT); VIEIRA NOBRE, Luís Tiago, 4835-011 GUIMARÃES (PT); DA CÂMARA TEOTÓNIO PEREIRA, Rui, 4150-612 PORTO (PT)
(74) Representative: Patentree

(57) **Abstract**

The present disclosure refers to a composite material and to the method for obtaining the same, that comprises: 45 - 70% (m/m) of slate particles as filler; a polymeric matrix as binder selected from a list consisting of: thermosetting resin, thermoplastic resin, or mixtures thereof; wherein the particle size of the slate particles is less than 500 µm. The composite material of the present invention has improved mechanical qualities when compared with similar products namely impact and bending resistance and also antimicrobial properties.

## Description

### TECHNICAL FIELD

The present description concerns a composite material with antimicrobial agents of polymeric matrix reinforced with slate particles for the development of tiles and slabs for public spaces, namely for hospitals and schools. It is intended to value the reuse of slate particles with antimicrobial functionalities.

### BACKGROUND

It is known that waste products, that originate from the extraction of ore, through industrial processes and civil construction, will accumulate over time. The processes of transporting and disposing of such waste products, associated with the loss of productivity, are the ones that lead to high economic losses, reducing the profit margin of enterprises. To prevent these waste products from causing an environmental disaster, laws are imposed that force producers to dispose them in appropriate places and through appropriate disposal methods.

An alternative to disposal of the wastes in places is to give the waste a new life, that is, by incorporating them into polymeric matrices in the form of mineral fillers. These fillers have played an important role in the growth of thermoplastic polymers since the beginning of their application.

In 1986, in Western Europe, the use of mineral fillers in thermoplastic applications was over 1 million tonnes. Thus, it is perceived that the introduction of mineral fillers from polymeric-based composite materials is a very recent issue and has come to be exploited with the aim of changing the mechanical, optical and thermal properties as well as the reduction in raw material acquisition costs.

It is known that fibres are capable of reinforcing polymeric matrices. However, the particles may not have an effective contribution when they act as reinforcement. Nevertheless, the abundance of this type of particles is greater, which also has contributed to the investment thereof in composite material products.

The polymeric matrix acts as a waste coating, maintaining the dimensional stability of the end product, a product with added value and with the possibility of entering the market. The introduction of these fillers must be done in a controlled way in order to avoid a significant loss of properties of the polymeric matrix. As such, the main aim of producing a product with composite materials is to combine the properties of the materials that constitute it, allowing the creation of a product with better properties than those individually possessed by each material.

Despite an increase in mechanical properties, the introduction of fillers into thermoplastic matrices reduces the resistance to impact, this being the greatest disadvantage of introducing the same.

Global demand for cast polymers used in residential and commercial construction market has become substantial. According to a recent study by Freedonia Group (Cleveland, Ohio), the market demand for cast polymer is expected to grow by 8.1% per year to 263 million/m² per year by 2016, with more than half of the demand located in the Asian continent (especially China). However, market gains will be driven by growth in the US, both in housing and remodelling sectors, with further expansion also expected in regions such as Europe, Australia and Japan, Freedonia guarantees.

In 2016, kitchen and bathroom countertops accounted for 86% of demand for cast polymer. While the new housing starts will account for the fastest gains, most demand will come from home renovations and institutional projects such as hospitals and schools, according to Freedonia. In the US, National Kitchen and Bath Assn. (NKBA, Hackettstown, NJ) report that the surfaces produced by cast polymer remain important in the development of components for bathrooms and kitchens, and the entry of these products into the market, for each sector, will overcome the competition, directly competing with materials such as granite and "Engineering Rock".

EP1659152A1 discloses a composite material formed from a mixture of 55% slate dust, 45% polystyrene, between 2% - 5% HIPS (high impact polystyrene) by weight. The tile is manufactured by pressing the different proportions. A small amount of oil is then added and mixed with the polystyrene as a binding agent, wherein the polystyrene surface is coated with a thin film of oil. The slate is then added to the mixture and the mixture is stirred to form a homogeneous mixture of polystyrene and slate. The mixtures are then heated to melt the polystyrene and moulded in an injection moulding machine to form a composite tile.

GB2041959A describes slate products, such as slate roofing tiles, formed by mixing slate particles in the form of small chippings powder with polyester by putting the mixture into a mould. To improve the impact resistance and to reduce the risk of breakage the material can be reinforced by adding glass fibres or plastic meshes to the mixture.

In modern architecture, for certain type of applications, materials with a wide functional range in terms of design, high strength and durability are in demand. This is where mineral-acrylic composite panels (PMMA/ATH) come about, it is made up of 80% natural minerals obtained from bauxite (aluminium hydroxides (ATH)) and 20% thermosetting acrylic resin (polymethylmethacrylate (PMMA)). These panels have a uniform, homogeneous and non-porous structure and can be obtained in different colours.

These materials are easy to cut and after adequate heat treatment, they can easily acquire different types of geometry. Due to these characteristics, PMMA/ATH composite panels represent a very interesting type of finishing material and have been used as interior design elements for 40 years.

These materials belong to the family of so-called cast polymers. This designation is given to composite materials and polymeric base reinforced with mineral fillers, as is the case in the previous example. The industry of cast polymers is quite comprehensive and is therefore categorized into 2 distinct groups, where the types of materials, transformation processes and methods used are addressed.

One of the objectives of the development of this type of products is basically focused on the development of new products capable of replacing the natural stone normally used, giving them the same appearance, greater strength, as well as better properties.

These facts are described in order to illustrate the technical problem solved by the embodiments of the present document.

### GENERAL DESCRIPTION

The present disclosure refers to a composite material that comprises slate particles, in powder or gravel (industrial name), and a thermoplastic polymeric matrix added to said particles.

A mineral-based polymeric composite has some advantages, among them: cost reduction, improved processing, density control, optical effects, control of thermal expansion, flame retardation, modifications regarding thermal conductivity properties and higher electrical resistance. Furthermore, it improves the mechanical properties, such as hardness and shear strength. For example, metacaulinite is used as filler of coating plastics for electric wiring to increase the electric resistance. Others, such as muscovite, are used in composites as flame retardants.

In a preferred embodiment of the present disclosure, the functional composite comprises about 50 to 70% (m/m) of its total formulation of slate waste in powder or, in case of gravel about 90 to 95% (m/m) of its total formulation of gravel, this waste coming from two types of equipment selected to treat slate slabs, the crusher (gravel) and the sander (powder). The function of this waste is to provide reinforcement to the end product (composite or ecocomposite material), giving it improved mechanical properties. Initially, an analysis of the particle size of the waste was made in order to separate the powder from the gravel, so that there are two different particle sizes in the composite development process.

In one embodiment, part of the slate particles was subject to a chemical treatment, before being introduced in the process, preferably by immersion with a Silane solution, more preferably Deolink™ Epoxy TM-100; which allows to reduce its surface tension and improve the adhesion to the matrix selected for the final formulation.

In another embodiment, a thermosetting polymer-based binder was further introduced in the process in order to create binding points within the slate waste and provide stability to the end product. To this end, it was decided to select 4 different types of matrix (thermosetting resin - epoxy, bio-epoxy, polyester) that were used in the process and individually added to the slate waste in order to verify the one with the greatest benefits in the end product obtained, namely the one economically most advantageous.

One of the aspects of the present disclosure refers to a composite material that comprises: 45% (m/m) of slate particles as filler; a polymeric matrix as a binder selected from a list consisting of: thermosetting resin, thermoplastic resin, or mixtures thereof; wherein the particle size of the slate particles is less than 3 cm; wherein the slate particles comprise a coating with silane to reduce the surface tension and to improve the adhesion to the polymeric matrix. The silane coating helps to reduce the surface tension and improve the adhesion to the polymeric matrix.

Another aspect of the present disclosure refers to a composite material that comprises:
45-70% (m/m) of slate particles as filler;
a polymeric matrix as binder selected from a list consisting of: thermosetting resin, thermoplastic resin, or mixtures thereof;
wherein the particle size of the slate particles is less than 500 µm.

In one embodiment, the composite material comprises 50-70% (m/m) of slate particles.

In one embodiment, the composite material can further comprise 3-10% (m_{antimicrobial agent}/m_{slate+polyrner}) of an antimicrobial agent, preferably 5-8% (m_{antimicrobial agent}/m_{slate+polymer}) of an antimicrobial agent.

In one embodiment, the composite material can comprise 50-95% (m/m) of slate particles, preferably 60-90% (m/m) of slate particles.

In one embodiment, the composite comprises 30-50% (m/m) of polymeric matrix and the particle size of the slate particles can be less than 500 µm.

In one embodiment, the composite comprises 5-15% (m/m) of polymeric matrix and the particle size of the slate particles can be less than 2 cm.

In one embodiment, the composite comprises 3-10% (m_{antimicrobial agent}/m_{slate+polymer}) of an antimicrobial agent embedded in the polymeric matrix, preferably 5-8% (m_{antimicrobial agent}/m_{slate+polymer}).

In one embodiment, the composite further comprises 3-8% (m/m) of an antimicrobial agent, preferably 5-7% (m/m) of an antimicrobial agent.

In one embodiment, the antimicrobial agent is embedded in the polymeric matrix.

In one embodiment, the composite further comprises a coating that comprises a second antimicrobial agent.

In one embodiment, said coating is a varnish, an ink, a gel, or combinations thereof.

In one embodiment, the antimicrobial agent is selected from a list of an antifungal, antibacterial, antiviral, antiparasitic, or mixtures thereof; preferably silver salts.

In one embodiment, the thermosetting matrix is selected from a list consisting of: epoxy, polyester, polyethylene or combinations thereof.

In one embodiment, the polymeric matrix is a high-density polyethylene matrix.

In one embodiment, the polymeric matrix is an epoxy matrix.

In one embodiment, the particle size of the slate particles is less than 400 µm.

In one embodiment, the d50 of the particles ranges between 1000-2000 µm, preferably between 1200-1500 µm.

In one embodiment, the slate particles are not treated with silane.

In one embodiment, the slate particles comprise a silane coating.

Another aspect of the present disclosure refers to articles that comprise the composite material previously described wherein the articles can be the top of a bench, a covering, or a piece of furniture, among others. Preferably a laboratory bench, or laboratory furniture, or hospital furniture, sink, covering plate, bench, stall, among others.

Another aspect of the present disclosure refers to a method for obtaining the composite material previously described that comprises the following steps: soaking the slate particles with the polymeric matrix in liquid state to form the composite; homogenizing and putting said composite into a mould; applying pressure in the mould, preferably between 15 - 30 Bar, to influence the dispersion of the polymeric matrix; curing the composite in said mould, preferably for 8-10 minutes between 80-90 °C for the composite to acquire the geometry of the mould; cooling the composite obtained in the previous curing step; removing the final composite from the mould.

In one embodiment, the method for obtaining the composite material comprises the application of a silane coating on the slate particles.

In one embodiment, the method for obtaining the composite material comprises the use of an antimicrobial agent in the resin formulation of said polymeric matrix.

In one embodiment, the composite is polished and a coating is applied under the surface of said composite.

In one embodiment, the pressure applied to the mould is produced by a hydraulic press.

In one embodiment, a textured fabric is incorporated in said mould for obtaining the composite with the texture induced by the fabric.

In one embodiment, the method comprises the following steps: coating the slate particles; mixing 45% (m/m) of slate coated particles with a polymeric matrix in liquid state to form a composite; wherein the polymeric matrix is selected from a list consisting of: thermosetting resin, thermoplastic resin, or mixtures thereof; wherein the particle size of the slate particles is less than 3 cm; putting the composite material obtained in the previous step into a mould; demoulding the composite material obtained.

### BRIEF DESCRIPTION OF THE DRAWINGS

For an easier understanding, figures are herein attached, which represent preferred embodiments that are not intended to limit the object of the present description.
**Figure 1****:** Represents one embodiment of the process steps for production of said composite.
**Figure 2****:** Represents one embodiment of the powder used for the production of the composite with exemplary particle sizes.
**Figure 3****:** Represents one embodiment of the samples of the present disclosure.
**Figure 4****:** Represents one embodiment of bright-field microscopy images of the solutions made without microbial agent (a) and with 3% (m/m) (b) and 5% (m/m) (c) of antimicrobial agent.
**Figure 5****:** Represents one embodiment of the samples of the present disclosure.
**Figure 6****:** Represents the process for production of prototypes.
**Figure 7****:** Represents the results of one embodiment for optimization the conditions of incorporation of an antimicrobial agent as surface coating.
**Figure 8:** Represents the results of one embodiment of the results obtained from the optimization of the concentration of antimicrobial agent by adding to the prototypes via the resin formulation, in the bulk of the composite.

### DETAILED DESCRIPTION

An of the aspects of the present disclosure refers to a composite material that comprises: at least 45% (m/m) of slate particles as filler; a polymeric matrix as binder selected from a list consisting of: thermosetting resin, thermoplastic resin, or mixtures thereof; wherein the particle size of the slate particles is less than 3 cm; wherein the slate particles comprise a coating with silane to reduce the surface tension and to improve the adhesion to the polymeric matrix. The composite material of the present invention has improved mechanical qualities when compared with similar products namely impact and bending resistance and also antimicrobial properties.

In the present disclosure the formation of the composite is ensured in a compression moulding process wherein the materials that compose the composite, slate waste, polymeric matrix and antimicrobial agent, are previously mixed and poured in a mould that gives the final shape of the composite which, in one embodiment, will be slabs with different shapes and textures. In a preferred embodiment, the slate particles are coated with silane.

In one embodiment, the processing technique of the present disclosure comprises the following steps, in a first stage, mixing, homogenizing and putting the matrix and the reinforcement/mineral waste inside the mould, thereafter the mould was placed in a press with integrated cooling system, to guarantee the compression of the composite. The matrix in liquid state soaks the reinforcement/mineral waste and, after the curing, the composite acquires the geometry of the mould. After a predefined time and with complete cooling ensured, the mould was opened and the final piece was removed.

In one embodiment, during this process it was possible to replicate the texture to the slabs produced by incorporating fabrics with certain textures. In this way, by applying pressure on the mould, the contact between the fabric and the slab is forced, and at the end a slab almost solidified with the texture induced by the fabric is obtained.

In one embodiment of the present disclosure, the development of a composite comprises two types of slate waste, powder and gravel (industrial name). These wastes come from two types of selected equipment, used for treating the slate slabs, the crusher (gravel) and the sander (powder). The wastes have different particle sizes and therefore initially it was necessary to carry out an analysis of the particle size of the waste in order to separate the powder from the gravel, so that we had two different particle sizes in the composite development process.

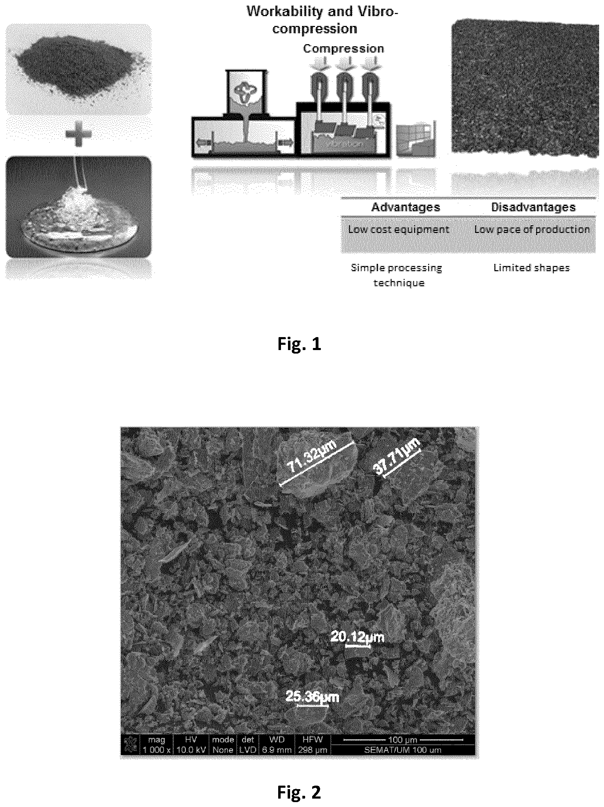

In one embodiment, after separating the particles by particle size, a SEM analysis (scanning electron microscope) was performed, aimed at proving that the powder used for the manufacture of the composite had the desired size. As shown in **Figure 2****,** the analysis of the figure shows that the powder to be used for the development of the composite has the desired particle size (≤ 500 µm). It is also proven that a good particle size separation is achieved.

In one embodiment, the antimicrobial functionality was guaranteed by the impregnation of a finishing material with antimicrobial properties, achieved by adding silver salts, titanium dioxide or ammonium quaternary salts. This finishing was applied to the composite formed with the valued slate waste. This antimicrobial functionality has also been achieved by introducing these nanoparticles into the composite matrix.

One of the aspects of the present disclosure describes a polymeric matrix composite reinforced by slate waste with the incorporation of bioactive agents. It is possible to value slate waste and develop an antimicrobial finishing that allow to meet the needs/opportunities identified in the market.

In one embodiment, the products developed in composite material from raw materials of mineral origin, that is, non-porous, solid and homogeneous materials, are intended for different types of market niche each with its own needs. The wide range of applications of the present embodiment is due to its excellent properties, including: high rigidity, a very common characteristic in composite materials, high antimicrobial capacity, low weight, among others.

In one embodiment, the composite material of the present disclosure is very important for the hospital and laboratory industry. Since the hospital field requires that its products have antimicrobial properties, capable of preventing the spread of hospital infections, both to human resources and to their patients.

In one embodiment, the term mineral filler is given to a composite material which comprises a material in mineral powder, coming from rocks or minerals found in nature, mixed with a polymeric material, be it thermoplastic or thermosetting.

This mineral filler corresponds to minerals or rocks such as calcium carbonate, alumina trihydrate (ATH), limestone (calcite, dolomite), phyllite, mica (muscovite, phlogopite, biotite), silica (quartz, zeolite), talc, pyrophyllite (agalmatolite), plaster, barite, wollastonite, smectite (bentonite, montmorillonite, hectorite, saponite), barium sulphate, anthracite and illite.

**Table I - Properties of mineral fillers**

| **Property** | **Alumina trihydrate (ATH)** | **Calcium carbonate** | **Silica** | **Barium sulphate** | **Anthracite** |
|---|---|---|---|---|---|
| **Physical state** | Powder | Powder/granules | - | - | - |
| **Brightness** | 90-92 | - | - | - | - |
| **Density (g/cm³)** | 2.42 | 2.70-2.95 | 2.30 | 4.25-4.50 | 1.25-2.50 |
| **pH** | 9-10 | 8-9 | - | 7 | - |
| **Hardness (Mohs)** | 2.5-3.5 | - | - | - | 1-1.5 |
| **Melting temperature (°C)** | 220 | 825 | 1710 | 1580 | - |

In one embodiment, distinct properties are associated with each type of mineral filler, which may be influenced by factors such as particle size, shape, hardness, chemical composition, crystalline structure, among others. For example, the smaller the particle size of the filler, the larger the surface area and therefore the greater the interaction between the mineral reinforcement and the matrix.

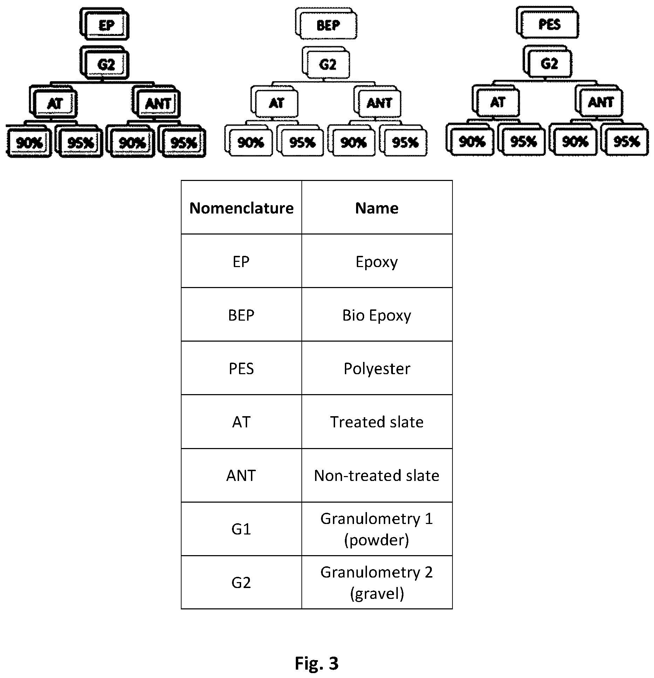

In one embodiment, in **figure 3****,** an embodiment of samples produced by silane treatment is indicated.

In one embodiment, Table II and Table III show bending tests with 50% slate powder and 70% slate powder, respectively, in which V.C. refers to the variation coefficient (VC), also known as relative standard deviation (RSD).

**Table II - Bending tests with 50% slate powders**

| **Sample** | **Stress value (Mpa) V.C. (%)** | **Deformation (%) V.C. (%)** | **Modulus of elasticity (Gpa) V.C. (%)** |
|---|---|---|---|
| **Treated slate and Epoxy matrix** | 66.77 | 0.77 | 9.361 |
| | 3 | 2 | 2.98 |
| **Non-treated slate and Epoxy matrix** | 82.81 | 0.65 | 13.365 |
| | 3 | 2 | 5.67 |
| **Treated slate and Bio-Epoxy matrix** | 51.07 | 0.61 | 11.706 |
| | 13 | 12 | 10 |
| **Non-treated slate and Bio-Epoxy matrix** | 82.24 | 0.55 | 16.880 |
| | 10 | 6 | 8.26 |
| **Treated slate and Polyester matrix** | 40.35 | 0.93 | 6.639 |
| | 10 | 10 | 4.10 |
| **Non-treated slate and Polyester matrix** | 47.12 | 0.66 | 7.555 |
| | 7 | 5 | 8.59 |

**Table III - Bending tests with 70% slate powders**

| **Sample** | **Stress value (Mpa) V.C. (%)** | **Deformation (%) V.C. (%)** | **Modulus of elasticity (Gpa) V.C.(%)** |
|---|---|---|---|
| **Treated slate and Epoxy matrix** | 66.09 | 0.71 | 12.231 |
| | 6 | 7 | 5.3 |
| **Non-treated slate and Epoxy matrix** | 78.18 | 0.42 | 20.304 |
| | 7 | 5 | 5.74 |
| **Treated slate and Bio-Epoxy matrix** | 78.54 | 0.55 | 15.428 |
| | 11 | 8 | 8.61 |
| **Non-treated slate and Bio-Epoxy matrix** | 83.41 | 0.51 | 17.804 |
| | 5 | 9 | 3.80 |
| **Treated slate and Polyester matrix** | 45.82 | 0.88 | 8.398 |
| | 7 | 3 | 7.08 |
| **Non-treated slate and Polyester matrix** | 68.30 | 0.70 | 13.920 |
| | 6 | 6 | 7.23 |

The composite material with 50% of slate untreated with Bio-Epoxy matrix has a bending modulus of 16.8 GPa and the composite material with 70% of slate untreated with Epoxy matrix has a bending modulus of 20 GPa.

In one embodiment, after processing the samples, i.e. after obtaining the base product (slate waste-reinforced polymeric matrix composite), it was necessary to move on to the development of the product intended in the present embodiment (polymeric matrix composite reinforced by slate wastes having antimicrobial functionality), i.e. adding antimicrobial capacity to the base product. In one embodiment, this process can be done in two ways: application of bioactives in the resin formulation or with the application of a solvent-based varnish with waterproofing power. The aim of these solutions is to ensure that there is no porosity on the surface of the product that would allow bacteria to proliferate. In this way, it was possible to introduce to the composite of the present embodiment an antimicrobial function. This functionality has allowed one of the technical specifications required in the development of this type of product to be met, i.e. to resist the attack of bacterial agents and to keep the surface of the product as hygienic as possible.

In one embodiment bioactive agents (BactiBlock®) were integrated into granulometry 2 plates and the addition of this agent was done by integrating it into the resin. In granulometry 1 plates a deposition of a varnish having (3% (m/m) and 5% (m/m)) and without bioactive agents was done. The plates were square with 5cm by 5cm and the samples were the following.

**Table IV - Sample composition**

| **Samples** | **Sample composition** | | **% Antimicrobial** |
|---|---|---|---|
| | **Reinforcement** | **Matrix** | |
| **A** | Slate powder | Epoxy | Reference |
| **B** | | | 0 |
| **C** | | | 3 |
| **D** | | | 5 |
| **E** | Slate gravel | Epoxy | 0 |
| **F** | | | 3 |
| **G** | | | 5 |

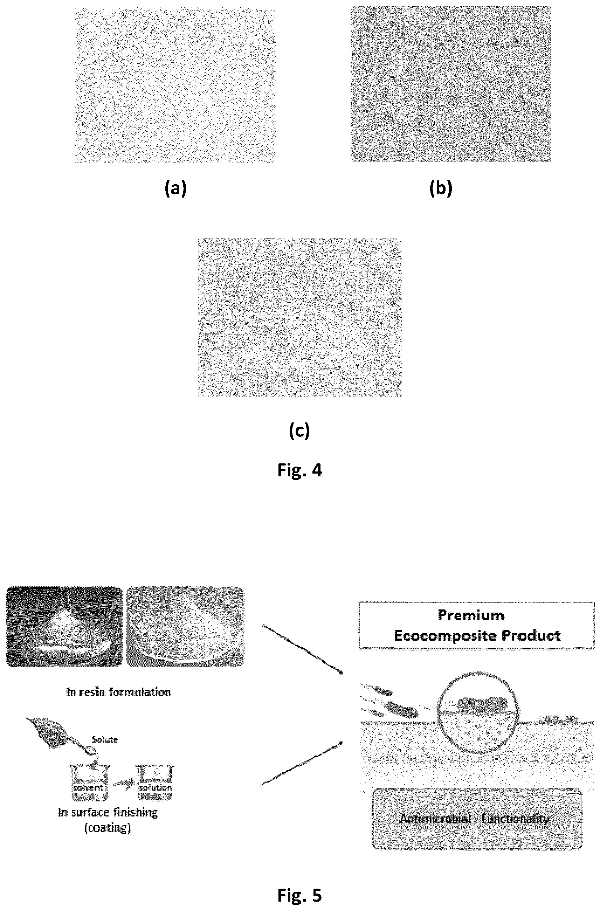

In one embodiment, **figure 4** shows light-field microscopy images of the solutions performed, without (a) and with 3% (m/m) (b) and 5% (m/m) (c) antimicrobial agent. Through observation and analysis of the figures it is possible to conclude that both for the solution with 3% (m/m) and 5% (m/m) of antimicrobial additive there is a good dispersion of the particles and also with the increase in percentage, as expected, there is also an increase in density of the particles.

In one embodiment, **figure 5** shows an embodiment of the production of prototypes where the hot compression moulding process was studied in detail in order to guarantee the correct adjustment of the adapted equipment in order to produce structures with the desired characteristics.

In one embodiment, with the aim of studying the slate structure, the structure of the composite material, the waterproofing of the composite and also the presence of silver particles that have been added to promote an antimicrobial behaviour to the composite material, a SEM (scanning electron microscopy) analysis was performed on the following set of samples.

**Table V - Properties of the composite material of each sample and reference material (sample A, B, C)**

| **Samples** | **Sample composition** |
|---|---|
| A | Slate Natural Stone |
| B | Reference (composite material) |
| C | Composite with solvent |
| D | Sample with 3% of antimicrobial additive mixed in the stirrer for 10 minutes |
| E | Sample with 3% of antimicrobial additive mixed in the stirrer for 20 minutes |
| F | Sample with 3% of antimicrobial additive mixed in the stirrer for 30 minutes |
| G | Sample with 5% of antimicrobial additive mixed in the stirrer for 10 minutes |
| H | Sample with 5% of antimicrobial additive mixed in the stirrer for 20 minutes |
| I | Sample with 5% of antimicrobial additive mixed in the stirrer for 30 minutes |
| J | Sample with mixture of 3% of antimicrobial additive in the resin formulation |
| L | Sample with mixture of 35% of antimicrobial additive in the resin formulation |

In one embodiment, a microstructural analysis was performed on natural slate. One of the aims was to study the structural morphology of natural stone. For both 3% (m/m) and the 5% (m/m) solutions there was a good dispersion of the particles due to the use of a magnetic stirrer which then promoted a good mixture. With the increase in the content of the antimicrobial additive it was possible to observe an increase in the number of particles. The following conclusions were reached:
- For samples with an antimicrobial agent in the resin formulation, with 3% (m/m), no silver particles were observed;
- For higher contents, 5% (m/m) and 8% (m/m), particles were observed;
- Through the chemical analysis performed, the observed particles are proven to be silver salts (antimicrobial additive);
- For both 3% (m/m) and 5% (m/m) solutions there is good particle dispersion;
- By increasing the antimicrobial additive content an increase of the number of particles can be observed;
- As for the samples with the antimicrobial additive in the solvent, with 15% (m/m) and 20% (m/m), equalising the probability of appearance of the particles at the surface, with the samples with additive in the resin formulation.

In one embodiment, after the antimicrobial agents had been integrated, where it was intended to provide the composite surfaces with antimicrobial activity, the need was felt to optimise the incorporation percentages. Thus it was necessary to optimise the processing of these samples to obtain the desired behaviour. To do so, this task was divided into two different stages, that is, on the one hand it was necessary to lower the percentage of antimicrobial additive when it was added to the solvent and, on the other hand, to alter somewhat the processing of the samples where the antimicrobial additive was added in the resin formulation.

**Table VI - Optimization of the conditions of incorporation of antimicrobial additive as surface coating**

| **Samples** | **Sample composition** | | **% Antimicrobial** |
|---|---|---|---|
| | **Reinforcement** | **Matrix** | |
| **B** | Slate powder | Epoxy Resin | - |
| **C** | Slate powder | Epoxy Resin | Only Solvent |
| **D** | Slate powder | Epoxy Resin | 15% in Solvent |
| **E** | Slate powder | Epoxy Resin | 20% in Solvent |
| **H** | Slate powder | Epoxy Resin | 5% in Solvent |
| **I** | Slate powder | Epoxy Resin | 8% in Solvent |

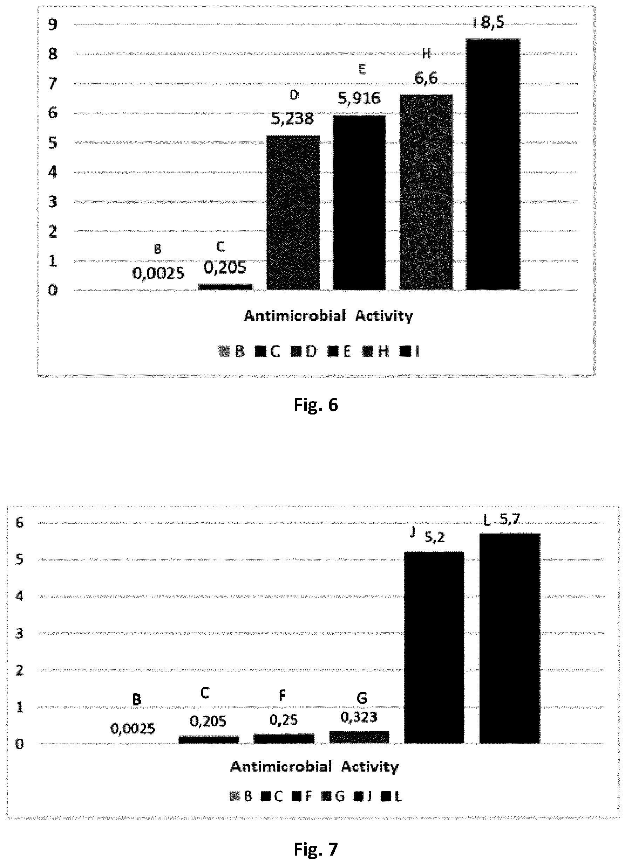

In one embodiment, according to **Figure 6****,** with these results it can be concluded that the concentration of the antimicrobial additive to be added to the prototypes has been optimised by means of antimicrobial finishing. Sample H has 5% (m/m) of antimicrobial additive and an increase can already be observed with respect to the previous ones, which means that 15% (m/m) and 20% (m/m) was too high and did not result in an increase of the antimicrobial activity. Sample I, shows 8% (m/m) of additive and a significant increase can be observed in relation to sample H.

**Table VII - Optimization of the conditions of incorporation of antimicrobial additive as surface coating**

| **Samples** | **Sample composition** | | **% Antimicrobial** |
|---|---|---|---|
| | **Reinforcement** | **Matrix** | |
| **B** | Slate powder | Epoxy Resin | - |
| **C** | Slate powder | Epoxy Resin | Only Solvent |
| **F** | Slate powder | Epoxy Resin | 5% in Resin |
| **G** | Slate powder | Epoxy Resin | 8% in Resin |
| **J** | Slate powder | Epoxy Resin | 5% in Resin + Sample polishing |
| **L** | Slate powder | Epoxy Resin | 8% in Resin + Sample polishing |

In **figure 7****,** it can be concluded from these results that it is possible to optimise the concentration of antimicrobial additive to be added to the prototypes by formulating the resin in the mass of the composite. Sample J has 5% (m/m) antimicrobial additive and more polishing of the sample and a very significant antimicrobial activity is already observed. The same happens with sample L, which means that the polishing of the sample causes the silver particles to be on the surface and can eliminate the bacteria that were placed in the samples.

The embodiments described are combinable with each other.

The present invention is, of course, in no way restricted to the embodiments described in this document and an person of ordinary skill in the art may foresee many possibilities of modifying it and of substituting technical characteristics with equivalent ones, depending on the requirements of each situation, as defined in the attached claims. The following claims define additional embodiments of the present description.

## Claims

1. Composite material that comprises:
45-70% (m/m) of slate particles as filler;
a polymeric matrix as binder selected from a list consisting of: thermosetting resin, thermoplastic resin, or mixtures thereof;
wherein the particle size of the slate particles is less than 500 µm.

2. Composite material according to the previous claim, wherein the slate particles are 50-70% (m/m) of the composite material.

3. Composite material according to any of the previous claims, wherein the thermosetting polymeric matrix is a matrix that comprises epoxy.

4. Composite material according to any of the previous claims, wherein the polymeric matrix is 30-50% (m/m) of the composite material.

5. Composite material according to any of the previous claims, wherein the composite comprises a coating selected from a varnish, an ink, a gel, or combinations thereof.

6. Composite material according to any of the previous claims, wherein the coating comprises an antimicrobial agent selected from a list of antifungal, antibacterial, antiviral, antiparasitic, or mixtures thereof.

7. Composite material according to any of the previous claims, further comprising 3-10% (m_{antimicrobial agent}/m_{slate+polymer}) of an antimicrobial agent soaked in the polymeric matrix, preferably 5-8% (m_{antimicrobial agent}/m_{slate+polymer}).

8. Composite material according to any of the previous claims, wherein the composite material is polished for emergence of the antimicrobial agents up to the surface of said material.

9. Composite material according to any of the previous claims, wherein the particle size of the slate particles is less than 400 µm.

10. Composite material according to any of the previous claims, wherein the polymeric matrix comprises polyester.

11. Composite material according to any of the previous claims, wherein the polymeric matrix comprises an antimicrobial agent selected from a list of antifungal, antibacterial, antiviral, antiparasitic, or mixtures thereof.

12. Composite material according to any of the previous claims, wherein the slate particles are not treated with silane.

13. Composite material according to any of claims 1-11, wherein the slate particles comprise a silane coating.

14. Articles that comprise the composite material of any of claims 1-13, wherein said article is the top of a bench, a coating, or a piece of furniture, preferably the top of a laboratory bench, or laboratory furniture, or hospital furniture, sink, slabs of coating, stall, bench.

15. Method for obtaining the composite material of any of claims 1-14 that comprises the following steps:
soaking the slate particles with the polymeric matrix in liquid state to form the composite;
homogenizing and putting into a mould;
applying a pressure in the mould, preferably between 15 - 30 Bar, to disperse the polymeric matrix;
curing the composite in said mould for the composite to acquire the geometry of the mould, preferably for 8-10 minutes between 80-90 °C;
cooling the composite obtained from the previous curing step;
removing the final composite from the mould.
